# EUROPEAN PATENT SPECIFICATION

(11) **EP 4 280 335 B1**
(45) Date of publication and mention of the grant of the patent: **07.05.2025**
(21) Application number: 22173913.9
(22) Date of filing: 17.05.2022
(51) Int. Cl.: H01M 10/0562, C08L 83/04

(54) **SOLID ELECTROLYTES**
FESTELEKTROLYTE
ÉLECTROLYTES SOLIDES

(43) Date of publication of application: 22.11.2023
(73) Proprietor: Imec VZW, 3001 Leuven (BE); Universiteit Hasselt, 3500 Hasselt (BE)
(72) Inventor: DE SLOOVERE, Dries, 3500 Hasselt (BE); HARDY, An, 3740 Bilzen (BE); VAN BAEL, Marlies, 3461 Molenbeek-Wersbeek (BE); VEREECKEN, Philippe, 3321 Hoegaarden (BE)
(74) Representative: Winger

(56) References cited:
- WU JINHUA ET AL: "Functional composite polymer electrolytes with imidazole modified SiO2 nanoparticles for high-voltage cathode lithium ion batteries", ELECTROCHIMICA ACTA, ELSEVIER, AMSTERDAM, NL, vol. 320, 20 July 2019 (2019-07-20), XP085779020, ISSN: 0013-4686, [retrieved on 20190720], DOI: 10.1016/J.ELECTACTA.2019.134567
- TAO LUMI ET AL: "Luminescent Ionogels with Excellent Transparency, High Mechanical Strength, and High Conductivity", NANOMATERIALS, vol. 10, no. 12, 15 December 2020 (2020-12-15), pages 2521, XP055975172, DOI: 10.3390/nano10122521

## Description

### Technical field of the invention

The present invention relates to the field of solid electrolytes. More in particular, the present invention relates to solutions for forming solid electrolytes, and to methods for forming solid electrolytes therewith.

### Background of the invention

The use of solid electrolytes in lithium-ion batteries (LIBs) instead of their liquid counterparts may increase their energy density to values higher than 800 Wh/L when combined with state-of-the-art electrode materials. Electrolytes typically do not contribute any energy density to the battery and should therefore be made as thin as possible. Solid electrolytes can be made very thin, allowing to increase the amount of active material in the battery. Solid electrolytes preferably provide a good contact with the electrodes, and are therefore preferably somewhat compliant. Furthermore, their ionic conductivity is preferably sufficiently high so as to not limit the battery charging and discharging rates.

Solid electrolytes can comprise a liquid electrolyte compound, such as an ionic liquid (IL). Ionic liquids are salts with a melting point lower than 100 °C. Their incorporation into solid electrolytes is a viable approach to achieve safe LIBs because of their beneficial qualities, such as high ionic conductivity, wide electrochemical stability window, and non-flammability. ILs can be confined within a solid material, which may be termed an "ionogel". These ionogel electrolytes typically share the promising qualities of the incorporated IL, with the additional benefit that risks of leakage are mitigated. This type of solid electrolyte can comprise a large number of different solid matrices, which are typically divided into two categories: polymeric materials and inorganic materials.

In polymer materials type ionogel electrolytes, ILs (e.g., comprising dissolved lithium salts, and an ionic liquid electrolyte (ILE)) are incorporated into a polymeric matrix, where the IL may act as a plasticizer. Their functional properties (e.g. lithium ion conductivity) are often less beneficial than that of the pure ILE.

In inorganic materials type ionogel electrolytes, various inorganic materials may be used as solid matrix to incorporate ILs, such as metal oxides (e.g., TiO₂) and nonmetal oxides (e.g., SiOz). However, the latter are by far the most popular choice. Porous silicon oxide offers a large surface area, and has a high thermal and mechanical stability. Furthermore, an interfacial layer that may be formed on walls of the pores of the porous silicon oxide, which may be formed of strongly adsorbed and highly ordered IL cations and anions, may provide a good ionic conduction. This effect can outweigh any decreased ionic conductivity due to IL confinement, and may result in an ionic conductivity several times higher than that of the incorporated ILE. Under the right synthesis conditions, these materials can form an interconnected oxide matrix. This means that there is a continuous surface, forming undisrupted paths for lithium ion conduction from one end of the porous silicon oxide matrix of the ionogel electrolyte to the other.

To be used in a commercially viable production process, an ionogel electrolyte preferably meets three preferences. Firstly, the ionogel electrolyte preferably has good functional properties. The ionogel electrolyte's role is to transport (lithium) ions from one electrode to the other. The rate at which this occurs can be expressed as the ionic conductivity. Preferably, an ionogel electrolyte of a battery has good ionic conductivity. When the ionogel electrolyte's ionic conductivity is low, ions may not be readily transported between the electrodes, increasing polarization and limiting the occurrence of redox processes within the electrodes. This may ultimately compromise the battery energy and power density.

Secondly, the manufacturability of the ionogel electrolyte preferably is good. A good battery performance may rely on the successful integration of an electrolyte and a porous electrode. To make adequate use of its functional properties, the ionogel electrolyte should be in intimate contact with the porous battery electrodes. This can be achieved by liquid processing, wherein the ionogel electrolyte is impregnated as a solution, e.g., liquid precursor, in the electrodes and is then transformed into a solid. This approach puts certain preferences on the manufacturability of the ionogel electrolyte. More particularly, the development of an upscale continuous impregnation process preferably provides a precise control over the chemistry and processes involved in the solidification reaction, preferably allowing this process to occur within a very short and controllable timeframe.

Thirdly, the ionogel electrolyte preferably has good compatibility with other components of the battery. For the impregnation of a solution for forming the ionogel electrolyte in a porous electrode, preferably, both components are compatible with each other. For instance, the presence of acid or bases in the solution may damage the crystal structure of the electrode particles. Also, the contact with a solid surface may alter the solution properties (e.g., pH value) and, therefore, its chemistry, to such an extent that the solidification is prevented or delayed, or that its functional properties are lost. Ideally, the solution does not contain any components that can damage the electrodes, and its solidification process is not influenced by it being present in the electrode.

Ionogel electrolytes of the state of the art do not meet each of the three basic preferences described above. Ionogel electrolytes can be divided into three classes, each of which typically meets at most two of the three preferences.

A first type of ionogel electrolytes is polymer-based ionogel electrolytes. When an electrolyte compound, e.g., ILE, is incorporated in a polymeric matrix, lithium ions can interact with the polymer chains (depending on their functional groups). The ILE often interacts with the polymer, and this results in good miscibility and in a decrease in ionic conductivity. Polymer-based ionogel electrolytes typically have a good manufacturability owing to the fast polymerization process. For instance, microwave-assisted thermal polymerization of a liquid solution containing acrylate-type monomers may form a polymer-based ionogel electrolyte in only a few seconds. Polymer-based ionogel electrolytes typically show a very good compatibility with the electrodes. Solutions for forming the ionogel electrolyte can simply be drop-casted on electrodes to prepare the desired ionogel electrolyte, with good adhesion and no structural breakdown. These ionogel electrolytes can be both flexible and mechanically resistant. However, polymer-based ionogel electrolytes typically have a low ionic conductivity, which is often lower than that of the incorporated ionic liquid. Although SiO₂ nanoparticles have been used as filler in polymer-based ionogel electrolytes, these may not significantly increase their ionic conductivity. The dispersion of these filler nanoparticles in polymer-based ionogel electrolytes is unlikely to result in the formation of a continuous interface, e.g., of the silicon oxide, with undisrupted conduction pathways for lithium ions, so that the transport of lithium ions will still be limited by their movement throughout the polymer matrix.

A second type of ionogel electrolytes is silicon oxide-based ionogel electrolytes formed with non-hydrolytic solidification. In silicon oxide-based ionogel electrolytes, the electrolyte compound, e.g., ILE, can be incorporated into a porous silicon oxide matrix. In the classic sol-gel non-hydrolytic synthesis method for ionogel electrolytes based on porous silicon oxide matrices with large interconnected surface area, a homogeneous liquid mixture containing the electrolyte compound and silanes from which the porous silicon oxide matrix may be formed after hydrolysis and condensation, is prepared. The electrolyte compound and silicon oxide matrix form a composite in-situ, wherein the silicon oxide matrix precursors (e.g., tetraethyl orthosilicate) react to form a matrix encapsulating the electrolyte compound. The electrolyte compound is selected so that it may act as a template for the formation of the porous silicon oxide matrix.

This type of ionogel electrolyte may comprise a continuous silicon oxide surface, which means that lithium ions can be transported over undisrupted conduction paths, from one end of the matrix to the other. This can result in high ionic conductivity values. In other words, these materials have good functional properties. The formation of the porous silicon oxide matrix from a solution (which also contains the ILE) is catalyzed, which means that it can be formed in a short timeframe (typically a few hours), resulting in a good manufacturability. The synthesis protocols of the state of the art typically rely on the addition of an acid, such as formic acid (FA), HCl, or HPF₆ to form the porous silicon oxide matrix in a short timeframe. This kind of synthesis protocol can also be used to organically modify the matrix. Integration of these ionogel electrolytes with battery electrodes is typically done by impregnating the solution in the porous electrode structure. Unfortunately, the addition of acids to the solution may be incompatible with the electrodes, as the acids may damage the active material particles. Therefore, the aforementioned benefits of this kind of ionogel electrolytes cannot be realized in an all-solid-state battery.

A third type of ionogel electrolyte is a standard nano-solid composite electrolyte (nano-SCE). The standard nano-SCE consists of a porous silicon oxide matrix with an ILE filler. (See, e.g., CHEN, Xubin, et al. Silica gel solid nanocomposite electrolytes with interfacial conductivity promotion exceeding the bulk Li-ion conductivity of the ionic liquid electrolyte filler. Science advances, 2020, 6.2: eaav3400.) In contrast to ionogel electrolytes of the second type, the nano-SCE is not synthesized in a non-hydrolytic route. Instead, an aqueous mixture having a pH of approximately 5, and containing ILE and TEOS/organosilicon compounds, with a large excess of water and alcohol solvent, is used as solution for forming the ionogel electrolyte. At this pH, the hydrolysis of the alkoxy groups is typically slow compared to condensation reactions. After gelation, the gel can be dried to remove all the free water and solvent. As a continuous silicon oxide surface may be formed, the nano-SCE may have a high ionic conductivity. A chemisorbed water layer may be present at the silicon oxide surface, which improves molecular ordering of the IL. This ultimately improves the dissociation of Li⁺, allowing lithium ions to diffuse fast along the interface layer. This synthesis procedure produces a porous silicon oxide matrix consisting of closely packed silicon oxide nanoparticles, forming relatively small pores (10-30 nm) wrapped around relatively large pores (100-150 nm). This structure has a very high specific surface area, which may be advantageous for obtaining a high ionic conductivity. This may result in bulk ionic conductivity values several times higher than that of the incorporated ILE. In other words, the standard nano-SCE has good functional properties. No acid is added to the solution, meaning that the solution has a good compatibility with the battery electrodes.

The standard nano-SCE production process relies on the mixing of all reagents and the gelation process which starts directly after the mixing. This is a time-dependent process, and the solution typically takes several days to completely solidify. The exact gelation time depends on a large number of factors, such as the temperature, the specific ILE incorporated, and silanes that are used for forming the porous silicon oxide matrix. Therefore, the main disadvantage of the standard nano-SCE is its manufacturability: the long, variable solidification time restricts the upscaling potential of this technology since it would drastically slow down the battery production process. As mentioned before, the electrolyte gelation process is extremely dependent on the solution pH. The surface chemistry of active materials can drastically alter the solution pH when the solution for forming the ionogel electrolyte is filled into the pores. Therefore, depending on the specific active material, the electrochemical properties of the ionogel electrolyte may be different, or the electrolyte may not solidify at all. When solidification does occur, the casting process has to be performed at the right moment, i.e., when the precursor solution has a viscosity compatible with the coating technique (typically blade coating or slot die coating), but before it becomes a gel. Although this can be done by controlling the timing of the casting process, this is not very reliable as the right coating time depends significantly on slight differences in temperature, humidity, and convection. Another known way to time the process is to measure the turbidity of the precursor solution in function of time, allowing to pinpoint the right time for the casting of the solution. Still, the process itself takes too much time to be compatible with a continuous processing for battery production. LIBs are typically manufactured by a roll-to-roll process with speeds up to 1 m s⁻¹. The rolls cannot be stopped to wait for the right moment.

Wu J. et A1., Electrochimica Acta, vol. 320, 134567, (2019) teaches functional composite polymer electrolytes with imidazole modified SiO2 nanoparticles for high-voltage cathode lithium ion batteries.

There is thus still a need in the art for devices and methods that address at least some of the above problems.

### Summary of the invention

It is an object of the present invention to provide a good solution, which may be used for forming a solid electrolyte. It is a further object of the present invention to provide a solid electrolyte formed therewith. It is a further object of the present invention to provide a good method for forming the solid electrolyte.

The above objective is accomplished by a method and apparatus according to the present invention.

It is an advantage of embodiments of the present invention that the solution may have a good long-term stability, so that the solution may be prepared some time, e.g., at least a month, before being applied to the electrodes to form the electrolyte.

It is a further advantage of embodiments of the present invention that the formation of the solid electrolyte from the solution may, after adding a radical initiator and applying a trigger (UV light and/or temperature), occur in a short time frame, e.g., within minutes. Furthermore, the formation of the solid electrolyte is not triggered by electricity and a current-conducting substrate is not needed, thereby universalising the applicability of the solution. It is, therefore, an advantage of embodiments of the present invention that a good manufacturability may be achieved. For instance, the solution can be stocked without the initiator for periods extending over a month and the initiator can be added to the precursor solution when loading the vessel that supplies the blade coater or slot-die coater. A UV lamp an/or a heating device can be installed to irradiate/heat the coating immediately after the blade or slot-die coating.

It is an advantage of embodiments of the present invention that the formation may not require the presence of a base or an acid, so that compatibility with other components of a battery, e.g., electrodes, may be good. It is a further advantage of embodiments of the present invention that the solid electrolyte that is formed may have a good ionic conductivity.

It is, therefore, an advantage of embodiments of the present invention that it may provide a combination of a good manufacturability, compatibility with other battery components, and good ionic conductivity.

In a first aspect, the present invention relates to a solution for forming a solid electrolyte, the solution comprising: a plurality of silicon oxide particles dissolved in a liquid medium, the silicon oxide particles being functionalized with organic moieties comprising: at least four non-hydrogen atoms, of which one atom is covalently bonded to a silicon atom of the silicon oxide particles, and a linkable functional group capable, after activation by a radical species, of forming a covalent bond by reaction with another identical linkable functional group, wherein the organic moiety comprises at least two atoms, not part of the linkable functional group, that are bonded by a π bond to each other, wherein a ratio of the number of said organic moieties to the number of silicon atoms comprised in the plurality of silicon oxide particles is at least 0.3. The solution further comprises an electrolyte compound.

In a second aspect, the present invention relates to a method for forming a solid electrolyte, the method comprising: a) obtaining the solution in accordance with embodiments of the first aspect of the present invention, b) adding, to the solution, a radical initiator adapted for forming the radical species for inducing said activation, and c) converting the radical initiator into the radical species.

In a third aspect, the present invention relates to a solid electrolyte comprising: a porous silicon oxide matrix, and an electrolyte compound, covering walls of pores of the porous silicon oxide matrix, wherein at least 30% of silicon atoms comprised in the silicon oxide matrix is separated from another silicon atom in the silicon oxide matrix by at least 4 atoms comprised in an organic linking chain.

In a fourth aspect, the present invention relates to a battery comprising the solid electrolyte in accordance with embodiments of the third aspect of the present invention.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

FIG. 1 is a chemical representation of silicon oxide particles in accordance with embodiments of the present invention.
FIG. 2A is a schematic representation of a reaction between linkable functional groups of different silicon oxide particles, to form a solid electrolyte, in accordance with embodiments of the present invention.
FIG. 2B is an enlarged schematic representation of a solid electrolyte in accordance with embodiments of the present invention.
FIG. 3 is a photograph of a solid electrolyte in accordance with embodiments of the present invention.
Fig. 4 is a plot of linear sweep voltammetry performed on three solid electrolytes in accordance with embodiments of the present invention.
FIG. 5A is a plot of three cyclic voltammetry steps performed on a solid electrolyte in accordance with embodiments of the present invention.
FIG. 5B is a plot of current as dependent on time, during an open cyclic voltammetry period of 20 minutes after the cyclic voltammetry of FIG. 5A, performed on a solid electrolyte in accordance with embodiments of the present invention.
FIG. 6 is a plot for a thermal gravimetric analysis, in a N₂ atmosphere and at a rate of 10 °C min⁻¹, of a solid electrolyte in accordance with embodiments of the present invention.
FIG. 7 is a transmission electron microscopy (TEM) image of a solid electrolyte in accordance with embodiments of the present invention.
FIG. 8 is a plot of the measured viscosity of a solution in accordance with embodiments of the present invention, as a function of time after formation of the solution.
FIGs. 9A and B are spectra from ²⁹Si NMR spectroscopy, performed on a solid electrolyte in accordance with embodiments of the present invention.
FIG. 10is a spectrum from ¹H NMR spectroscopy, performed on a solid electrolyte in accordance with embodiments of the present invention.
FIG. 11 is a spectrum from ¹³C NMR spectroscopy, performed on a solid electrolyte in accordance with embodiments of the present invention.
FIG. 12 shows the galvanostatic charge/discharge profile of LFP/Li cells containing a solid electrolyte obtained from a solution according to an embodiment of the present invention.
FIG. 13 shows the rate capability of LFP/Li cells containing the solid electrolyte used for FIG. 12 at rates from 0.05 C to 1 C at room temperature.
FIG. 14 shows the cycle stability of LFP/Li cells containing the solid electrolyte used for FIG. 12 at 0.1 C at room temperature.
FIG. 15 shows the Galvanostatic charge/discharge profiles of NMC622/Li cells containing a solid electrolyte obtained from the same solution as the one used for FIG. 12.
FIG. 16 shows an Arrhenius plot of the conductivity of the solid electrolytes obtained from samples 1, 2, and 3 according to embodiments of the present invention in addition to that of the ILE.

In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term "comprising" therefore covers the situation where only the stated features are present and the situation where these features and one or more other features are present. The word "comprising" according to the invention therefore also includes as one embodiment that no further components are present. Thus, the scope of the expression "a device comprising means A and B" should not be interpreted as being limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

In a first aspect, the present invention relates to a solution for forming a solid electrolyte, the solution comprising: a plurality of silicon oxide particles dissolved in a liquid medium, the silicon oxide particles being functionalized with organic moieties comprising: at least four non-hydrogen atoms, of which one atom is covalently bonded to a silicon atom of the silicon oxide particles, and a linkable functional group capable, after activation by a radical species, of forming a covalent bond by reaction with another identical linkable functional group, wherein the organic moiety comprises at least two atoms, not part of the linkable functional group, that are bonded by a π bond to each other, wherein a ratio of the number of said organic moieties to the number of silicon atoms comprised in the plurality of silicon oxide particles is at least 0.3. The solution further comprises an electrolyte compound.

In embodiments, the solid electrolyte may be an ionogel electrolyte.

Organic moieties are attached to the silicon oxide particles by a Si-C bond.

In embodiments, said ratio is from 0.3 to 1.0, preferably from 0.4 to 0.9, more preferably from 0.4 to 0.6. Said ratio results from the compounds that were used to make the solution, and may be determined therefrom if the protocol used to make the solution is available. Said ratio is preferably determined from NMR spectroscopy performed on the solution, e.g., from ²⁹Si NMR spectroscopy. A chemical structure of the organic moiety may be determined by techniques as are well-known to the skilled person, e.g., by NMR spectroscopy.

The functional groups, upon activation by the radical species, may link different silicon oxide particles to each other. This reaction, being induced by radicals, proceeds at a high rate. Therefore, solidification in the solution of embodiments of the present invention and, hence, formation of the solid electrolyte may proceed at a high rate. At the same time, despite the concentration of functional groups being relatively high, the stability of the solution is good as the organic moieties may only be reactive towards each other once activated.

The non-hydrogen atoms forming the linkable functional group are counted in the at least four non-hydrogen atoms comprised in each organic moiety.

In embodiments, the organic moiety is bonded to the silicon atom via a silicon-carbon bond. It is an advantage of these embodiments that a silicon-carbon bond may be stable. In embodiments, the at least four non-hydrogen atoms are selected from carbon, oxygen, nitrogen, and sulphur, preferably from carbon, oxygen and nitrogen. In embodiments, the organic moiety consists of atoms selected from carbon, oxygen, nitrogen, sulphur, and hydrogen, preferably selected from carbon, oxygen, nitrogen, and hydrogen. In embodiments, each silicon oxide particle comprises a silicon oxide network. The organic moieties are located at the periphery of the silicon oxide particle.

In embodiments, the at least two atoms that are bonded by a π bond to each other are part of a π-conjugated system. π-conjugated system comprises at least four atoms, different from hydrogen. It is an advantage of these embodiments that the organic moiety may have a high rigidity. In embodiments, the at least two atoms may be selected from carbon, oxygen, nitrogen, and sulphur, preferably from carbon, oxygen, and nitrogen, yet more preferably from carbon and oxygen. Preferably, the at least two atoms are only two atoms forming a carbonyl group conjugated to the double bound of the linkable functional group. Preferably, the linkable functional group is part of an acrylate or a methacrylate group, preferably a methacrylate group. Although the at least two atoms are not part of the linkable functional group, the linkable functional group may be part of the π-conjugated system. It is an advantage of the π-conjugated system that a high rigidity within the organic moiety may be achieved. Said rigidity may result in steric hindrance that may limit the condensation reaction rate that silicon oxide particles comprising the linkable functional group may achieve.

In embodiments, the organic moiety comprises a linear organic chain comprising at least four atoms. In embodiments, the linkable functional group and an organic connector chain binding the linkable functional group to the silicon atom form the linear organic chain having at least four atoms. In embodiments, the organic moiety is branched or may comprise at least one substituent, e.g., a side chain or an aromatic group, in addition to the linear organic chain. It is an advantage of these embodiments that the organic moiety may induce steric hindrance, which may reduce the condensation rate for the silicon oxide particles, so that the solution may have a better stability.

In embodiments, the silicon oxide particles (e.g. silicon dioxide particles) are adapted for forming a continuous silicon oxide matrix. In embodiments, each of the silicon oxide particles comprises a plurality of groups independently selected from alkoxy and hydroxy groups, bonded to silicon atoms comprised in the silicon oxide particles. The presence of these alkoxy and/or hydroxy groups may result in condensation reactions between different silicon oxide particles. Without being bound by theory, said activation may link different silicon oxide particles to each other by the covalent bond formed by the reaction between the linkable functional groups on different silicon oxide particles. As a result, the alkoxy and/or hydroxy groups on different silicon oxide particles may be located close to each other. Thereby, the condensation reactions may proceed at a high rate. Due to said condensation reactions, a continuous silicon oxide matrix may be formed by the plurality of silicon oxide particles.

In embodiments, the linkable functional group is separated from the silicon atom to which the organic moiety is bonded by an organic connector chain of at most 100 atoms, preferably at most 40 atoms, more preferably at most 20 atoms, even more preferably at most 10 atoms. Preferably, the organic connector chain has at least 2 atoms. In embodiments, the linkable functional group is separated from the silicon atom to which the organic moiety is bonded by a chain of at least 2 atoms. In embodiments, these atoms may be selected from carbon, oxygen, nitrogen, and sulphur, preferably from carbon, oxygen, and nitrogen, yet more preferably from carbon and oxygen. Preferably, every non-carbon atom forming said chain is linked to two carbon atoms belonging to said chain. In these embodiments, after the activation, which may result in connecting different silicon oxide particles to each other, the silicon atoms of the different silicon oxide particles may be located close to each other.

In embodiments, the linkable functional group may be selected from epoxide groups, vinyl groups, and vinylidene groups.

In preferred embodiments, the linkable functional group is a vinyl group or a vinylidene group. They are preferred because of their high stability in solution. Vinyl and vinylidene groups may readily react with vinyl and vinylidene groups after activation by a radical species. Preferably, the linkable functional group belongs to (is the double bond in) an acrylate or a methacrylate functional group. It is an advantage of these embodiments that reaction between different linkable functional groups may proceed very fast after said activation by the radical species.

In embodiments, at least one of the organic moieties has the formula CH₂=C(Y)COOL-.

In embodiments, at least 50 mol%, preferably at least 60 mol%, more preferably at least 70 mol%, yet more preferably at least 80 mol%, even more preferably at least 90 mol%, and most preferably all of the organic moieties have the formula CH₂=C(Y)COOL-.

L is an alkylene radical having from 1 to 7 carbon atoms, preferably from 1 to 5 carbon atoms, more preferably from 2 to 4 carbon atoms. Preferably, L is (CH₂)ₙ wherein n is from 1 to 5, preferably 2 to 4, more preferably 3.

Y is CH₃ or H, preferably CH₃.

In preferred embodiments, L is (CH₂)ₙ wherein n is from 1 to 5, and Y is CH₃.

In more preferred embodiments, L is (CH₂)ₙ wherein n is from 2 to 4, and Y is CH₃.

In most preferred embodiments, L is (CH₂)ₙ wherein n is 3, and Y is CH₃. In embodiments, the functionalized silicon oxide particles are obtainable by aging a precursor solution comprising an organosilane comprising a silicon atom attached to four groups, the four groups comprising the organic moiety and at least two alkoxy groups, preferably the organic moiety and three alkoxy groups. In these embodiments, the organosilane may comprise triethoxy(1-phenylethenyl)silane or 3-trimethoxysilylpropyl methacrylate, preferably 3-trimethoxysilylpropyl methacrylate. In embodiments, the precursor solution may further comprise a tri-alkoxysilane or a tetra-alkoxysilane, preferably a tetra-alkoxysilane. The tetra-alkoxysilane may comprise tetramethyl orthosilicate or tetraethyl orthosilicate, preferably tetraethyl orthosilicate. It is an advantage of these embodiments that tetra-alkoxysilanes may, through hydrolysis and condensation, form an extensive silicon oxide network. This is due to each tetra-alkoxysilane being capable of linking with four different silicon atoms, through four silicon-oxygen-silicon bonds.

In embodiments, the aging may be performed for from 0 to 70 days, such as from 2 hours to 50 days or from 30 to 40 days. The structure of the particles may depend on whether and how long aging is performed. In embodiments wherein no aging is performed, or for a short time, e.g., up to one day, the solution of embodiments of the present invention may have the same composition as the precursor solution, so that the particles may comprise the organosilane, and possibly the tetra-alkoxysilane. These embodiments are not preferred, as they may not result in the formation of a solid electrolyte having an extensive silicon oxide matrix. In embodiments wherein aging is performed, e.g., for at least one day, the particles, e.g., clusters or oligomers, may be formed by hydrolysis and condensation of the organosilane molecules, and, when present, other silanes such as tetra-alkoxysilanes.

In embodiments, the liquid medium comprises water, which may hydrolyse any (functionalized or non-functionalized) alkoxysilanes in the solution. In embodiments, the liquid medium comprises an alcohol, such as methanol or ethanol. An alcohol may be a good solvent for the silicon oxide particles. In preferred embodiments, the liquid medium comprises both water and alcohol. Preferably, the liquid medium comprises more alcohol than water. More preferably, the volume ratio of alcohol to water is from 1.5 to 2.5. The silicon oxide particles are dissolved in the liquid medium. This differentiates the solution of the present invention from a sol, i.e., a colloidal solution, that is often used to form solid electrolytes in the state of the art.

In embodiments, the solution has a pH of from 5 to 7, as measured with a Hanna^{®} HI-11310 pH Edge Electrode. It is an advantage of these embodiments that the solution is compatible with a range of materials, e.g., battery electrodes. However, different pH ranges may be more suitable for other materials. The pH of the solution may be adapted so that the solution is compatible with a particular material. It is an advantage of embodiments of the present invention that, as the activation may be triggered by radicals, not by protons, the pH of the solution may not affect a solidification rate.

In embodiments, a first concentration of the organosilane and a second concentration of the tri-alkoxysilane and/or tetra-alkoxysilane in the precursor solution are adapted so that, after said aging, the solution of the present invention is formed. In preferred embodiments wherein each organosilane comprises a single organic moiety, a ratio, in the precursor solution, of the first concentration to a sum of the first concentration and the second concentration, is typically equal to the ratio, in the solution, of the number of organic moieties comprised in the plurality of silicon oxide particles to the number of silicon atoms comprised in the plurality of silicon oxide particles.

In embodiments, a concentration of the organosilane in the precursor solution is from 0.1M to 1.3M, preferably from 0.2M to 0.7M. In embodiments, a concentration of the tri-alkoxysilane and tetra-alkoxysilane, combined, in the precursor solution is from 0.2M to 1.3M, preferably from 0.4M to 0.7M.

In embodiments, each silicon atom of the plurality of silicon oxide particles is bonded to at most one organic moiety. It is an advantage of these embodiments that the linkable functional group of an organic moiety on a silicon oxide particle is less likely to react with an identical linkable functional group of another organic moiety on the same silicon oxide particle.

In some embodiments, the solution comprises a radical initiator, capable of producing the radical species, e.g., after application of a trigger such as illumination or heating of the solution. The lifetime of radical initiators may be limited, so that the radical species may be produced from the radical initiators even in absence of the trigger. Therefore, the radical species is, preferably, added only shortly before the solution is used for forming the solid electrolyte.

In embodiments, the electrolyte compound is configured for acting as a template for forming a porous silicon oxide matrix. In embodiments, the electrolyte compound comprises an ionic liquid electrolyte or a polymer electrolyte, or a mixture thereof. Preferably, the electrolyte compound comprises the ionic liquid electrolyte. In embodiments, the ionic liquid electrolyte comprises an ionic liquid and a metal salt. In embodiments, the polymer electrolyte comprises a polymer and the metal salt. In these embodiments, the silicon oxide matrix that is formed from the solution may comprise a plurality of interconnected pores. The plurality of interconnected pores may be a result of the presence of the electrolyte compound in the solution (see for instance CHEN, Nan, et al. Ionogel electrolytes for high-performance lithium batteries: A review. Advanced Energy Materials, 2018, 8.12: 1702675; and CHEN, Xubin, et al. Silica gel solid nanocomposite electrolytes with interfacial conductivity promotion exceeding the bulk Li-ion conductivity of the ionic liquid electrolyte filler. Science advances, 2020, 6.2: eaav3400). Without being bound by theory, it is believed that the solution comprises regions of electrolyte compound. The silicon oxide matrix is formed around said regions of electrolyte compound. Thereby, said regions of electrolyte compound form the plurality of interconnected pores in the porous silicon oxide matrix. The electrolyte compound may cover inner surfaces of the porous silicon oxide matrix. Herein, a first layer, comprising the ionic liquid or the polymer, may cover said inner surfaces of the porous silicon oxide matrix, and a second layer, comprising the metal salt, may cover the first layer. Due to a combination of specific interactions between the porous silicon oxide matrix, the first layer, and the second layer, an ion of the metal salt, e.g., lithium, may be relatively free to move through the pores.

In embodiments, the ionic liquid may comprise a cation selected from 1-pentyl-1-methyl pyrrolidinium, 1-butyl-1-methyl pyrrolidinium, 1-propyl-1-methyl pyrrolidinium, 1-ethyl-1-methyl pyrrolidinium, 1-butyl-3-methyl imidazolium, 1-ethyl-3-methyl imidazolium, 1,2-dimethyl-3-propyl imidazolium, 1,2-diethyl-3,5-dimethyl imidazolium, trimethyl-n-hexyl ammonium, N-butyl-N-methyl pyrrolidinium, N-methyl-N-propyl piperidinium, and N-ethyl-N-methyl morpholidinium. In embodiments, the ionic liquid may comprise an anion selected from ClO₄⁻, BF₄⁻, PF₆⁻, BH₄⁻, PO₄³⁻, Cl⁻, Br⁻, I⁻, NO₃⁻, dicyanamide, thiocyanide, bistriflimide, bis(fluorosulfonyl)imide, bis(trifluoromethylsulfonyl)imide, bis(pentafluoroethylsulfonyl)imide, bis-(perfluoroethylsulfonyl)imide, N-(trifluoromethylsulfonyl)acetamide, Triflate (trifluoromethylsulfonate), DFOB (difluoro(oxalato)borate), PDI (dicyano-pentafluoroethyl-imidazole), TDI (dicyano-trifluoromethyl-imidazole), DMSI (cyclo-difluoromethyl-1,1-bis(sulfonyl)imide), HPSI (cyclo-hexafluoropropyl-1,1-bis(sulfonyl)imide), DFOD (difluoro(oxalato)borate), BFMB (bis(fluoromalonato)borate), BISON (tetracyanoboarate), N-(trifluoromethylsulfonyl)acetamide, DCTA (dicyanotriazolate), and bis(oxolato)borate.

In embodiments, the polymer may comprise a PEO-PPO block copolymer, such as a poloxamer such as Pluronic^{®} F127, P123 or F107, wherein PEO is polyethylene oxide and PPO is polypropylene oxide. In embodiments, the polymer may comprise an amphiphilic block copolymer, such as oligomeric alkyl poly (ethylene oxide) (Brij^{®}, Tergitol^{™}), alkyl-phenol poly(ethylene oxide) (Triton^{™}) or sorbitan esters (Tween^{®}, Span^{®}).

In embodiments, the metal salt may comprise a metal cation selected from Li⁺, Na⁺, K⁺, Ca²⁺, Mg²⁺, and Al³⁺, preferably Li⁺. In embodiments, the metal salt may comprise an anion selected from Cl⁻ (chloride), Br⁻(bromide), I⁻ (iodide), ClO₄⁻ (perchlorate), BF₄⁻ (tetrafluoroborate), NO₃⁻ (nitrate), BH₄⁻ (borohydride), PF₆⁻(hexafluorophosphate), dicyanamide, thiocyanide, bistriflimide, bis(trifluoromethylsulfonyl)imide, bis(fluorosulfonyl)imide, bis-(perfluoroethylsulfonyl)imide, BOB (bis(oxalate)borate), PO₄³⁻ (phosphate), Triflate (trifluoromethanesulfonate), BETI (bis(pentafluoroethanesulfonyl)imide), DFOB (difluoro(oxalato)borate), PDI (dicyano-pentafluoroethyl-imidazole), TDI (dicyano-trifluoromethyl-imidazole), DMSI (cyclo-difluoromethane-1,1-bis(sulfonyl)imide), HPSI (cyclo-hexafluoropropane-1,1-bis(sulfonyl)imide), DFOD (difluoro(oxalato)borate), BFMB (bis(fluoromalonato)borate), BISON (tetracyanoborate), N-(trifluoromethylsulfonyl)acetamide, and DCTA (dicyanotriazolate).

In embodiments, a concentration of the electrolyte compound in the solution is from 0.1 to 1.2 g/ml, preferably from 0.5 to 0.9 g/ml.

In embodiments wherein the electrolyte compound comprises the ionic liquid electrolyte, a concentration of the ionic liquid in the solution is from 0.08 to 1.2 g/ml and a concentration of the metal salt is from 0 to 0.24 g/ml, e.g., from 0.01 to 0.24 g/ml.

In embodiments wherein the electrolyte compound comprises the polymer electrolyte, a concentration of the polymer in the solution is from 0.08 to 1.2 g/ml and a concentration of the metal salt is from 0 to 0.24 g/ml, e.g., from 0.01 to 0.24 g/ml.

Preferably, a ratio of a molar concentration of the electrolyte compound to a molar concentration of silicon atoms comprised in the silicon oxide particles is from 0.1 to 5, preferably from 0.5 to 4.

Any features of any embodiment of the first aspect may be independently as correspondingly described for any embodiment of any of the other aspects of the present invention.

In a second aspect, the present invention relates to a method for forming a solid electrolyte, the method comprising: a) obtaining the solution in accordance with embodiments of the first aspect of the present invention, b) adding, to the solution, a radical initiator adapted for forming the radical species for inducing said activation, and c) converting the radical initiator into the radical species.

Preferably, step c) is performed within one day, preferably within 1 hour, after performing step b). In embodiments, step c) is performed while the solution has a pH of from 5 to 7, as measured with a glass electrode. It is an advantage of these embodiments that the solution may contact an electrode, without damaging the electrode, which would typically occur if the solution were basic or acidic.

In embodiments, said converting comprises illumination or heating of the solution. In embodiments, said illumination comprises UV radiation. In embodiments, the radical initiator comprises dimethoxy-2-phenylacetophenone, dibenzyol peroxide, or azobisisobutyronitril. It is an advantage of these embodiments that they may result in efficient activation of the reaction between linkable functional groups, in particular when the linkable functional groups are vinyl of vinylidene groups. In embodiments, the concentration of radical initiator in the solution after the adding of the radical initiator in step b) is from 1 g/l to 10 g/l.

In embodiments, the method further comprises a step d), after step c), of drying the solid electrolyte. Said drying may be for removing the liquid medium, e.g., water and/or alcohol. For this, the solid electrolyte may be placed in a dry room, i.e., a room with very low humidity, wherein the liquid medium may be induced to evaporate. Alternatively, the solid electrolyte may be dried by heating, preferably at a temperature of up to 70 °C.

Any features of any embodiment of the second aspect may be independently as correspondingly described for any embodiment of any of the other aspects of the present invention.

In a third aspect, the present invention relates to a solid electrolyte comprising: a porous silicon oxide matrix, and an electrolyte compound, covering walls of pores of the porous silicon oxide matrix, wherein at least 30% of silicon atoms comprised in the silicon oxide matrix is separated from another silicon atom in the silicon oxide matrix by at least 4 atoms comprised in an organic linking chain.

It is an advantage of the organic linking chain that the organic linking chain may result in improved mechanical characteristics of the solid electrolyte, such as an increased elasticity and structural integrity.

In embodiments, the porous silicon oxide matrix comprises a silicon oxide matrix comprising pores. These pores may have a diameter of from 5 to 500 nm, preferably from 10 to 150 nm. Preferably, the pores are interconnected with each other so that the porous silicon oxide matrix comprises a path through the interconnected pores from one side of the solid electrolyte to the other. Thereby, the electrolyte compound, covering walls of the pores, may form an ionically conductive path from one side of the solid electrolyte to the other. In embodiments, the porous silicon oxide matrix has a porosity of from 60 to 90%.

In embodiments, the solid electrolyte is formable by reacting the solution in accordance with embodiments of the first aspect of the present invention in a method in accordance with embodiments of the second aspect of the present invention.

In embodiments, the organic linking chain is the reaction product of two different organic moieties, after reaction of the two linkable functional groups of the two different organic moieties after activation by radical species. Typically, the organic linking chain comprises at least the two organic moieties excluding the linkable functional groups, and in addition, the reaction product of the linkable functional groups after a radical reaction of the linkable functional groups with each other. For example, when the linkable functional group comprises a vinyl, the organic linking chain comprises at least a linear, saturated chain of four carbon atoms, and furthermore, the organic moieties excluding the linkable functional group.

In embodiments, from 30% to 100%, preferably from 40% to 90%, more preferably from 40% to 60%, of silicon atoms are separated by each other by at least 4 atoms comprised in an organic linking chain.

Preferably, a ratio of a molar concentration of the electrolyte compound to a molar concentration of silicon atoms comprised in the solid electrolyte is from 0.1 to 5, preferably from 0.5 to 4. Due to the good mechanical characteristics of the solid electrolyte, a large amount the electrolyte compound may be present in the solid electrolyte.

Any features of any embodiment of the third aspect may be independently as correspondingly described for any embodiment of any of the other aspects of the present invention.

In a fourth aspect, the present invention relates to a battery comprising the solid electrolyte in accordance with embodiments of the third aspect of the present invention.

In embodiments, the battery comprises an anode and a cathode, separated from each other by the solid electrolyte. The solid electrolyte may, for instance, have a thickness of from 25 µm to 1 mm, preferably from 25µm to 100 µm.

The solid electrolyte may have a high ionic conductivity, such as at least 10⁻⁵ S/cm, preferably at least 10⁻⁴ S/cm, for example from 10⁻² to 10⁻⁴ S/cm, at 25 °C. The solid electrolyte may have a low electrical conductivity, such as at most 10⁻⁶ S/cm, preferably at most 10⁻¹⁴ S/cm, at 25 °C.

In embodiments, the anode comprises a conductive substrate comprising copper, nickel, aluminum, or stainless steel, preferably copper. Copper is often used as the anode substrate in solid-state batteries comprising lithium for ionic conduction, as copper does not intercalate lithium at low voltages, that is, copper does not alloy with lithium. In embodiments, the cathode comprises a conductive substrate comprising aluminium, nickel or stainless steel.

In embodiments, the solid electrolyte may be impregnated in a porous active electrode material present on a conductive substrate as described above, thereby forming a composite electrode (i.e., a composite positive electrode or a composite negative electrode).

The porous active electrode material typically comprises an active composite material, a polymer binder, and a conductive additive. The active composite material typically comprises electrode particles in electrical contact with each other. In these embodiments, the active composite material may be bonded together with the polymer binder, i.e., to physically stabilize the porous active electrode material. Examples of conductive additives are carbon black, graphite, carbon-based fibers or beads, or stainless steel fibers. They are comprised in the porous active electrode material and are typically in the pores thereof. For instance, the conductive additive may be 0-15 wt%, preferably 0.1 to 12 wt%, more preferably 4 to 11 wt% of the weight of the porous active electrode material.

In embodiments, the composite electrode is suitable for integration in a solid-state battery wherein it is used as the positive electrode. In these embodiments, the active composite material may comprise at least one material selected from lithium manganese nickel oxide (LMNO), lithium manganese oxide (LMO), lithium iron phosphate (LFP), lithium manganese iron phosphate (LMFP), Lithium manganese phosphate (LMP), lithium cobalt oxide (LCO), lithium nickel manganese cobalt oxide (NMC), and lithium nickel cobalt aluminum oxide (NCA). In different embodiments, the composite electrode is suitable for integration in a solid-state battery wherein it is used as the negative electrode. In these embodiments, the active composite material may comprise at least one material selected from lithium, graphite, silicon, tin, graphene, and lithium titanium oxide (LTO). In embodiments, the porous active electrode material comprises a composite, comprising for instance: silicon and graphite; or silicon and graphene.

The active composite material is typically present in an amount of from 70 to 91 wt% of the weight of the porous active electrode material.

A typical example of polymer binder is poly(vinylidene fluoride). The polymer binder is typically present in an amount of from 5 to 15% of the weight of the porous active electrode material.

In embodiments, impregnating the porous active electrode material comprises filling the pores of the porous active electrode material with the solution according to any embodiment of the first aspect.

Any features of any embodiment of the fourth aspect may be independently as correspondingly described for any embodiment of any of the other aspects of the present invention.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

### Example 1: Preparing a solution

In this example, a solution in accordance with embodiments of the present invention is prepared. First, a precursor solution is prepared, containing an electrolyte compound, e.g., an ionic liquid electrolyte or a polymer electrolyte, and an organosilane, e.g., a trialkoxysilane and/or a dialkoxysilane. Herein, the organic moiety is covalently bonded to a silicon atom of the organosilane. In this example, the organic moiety comprises a linkable functional group that is a vinyl group. The organic moiety further comprises at least four non-hydrogen atoms, of which one atom is covalently bonded to a silicon atom of the silicon oxide particles. In addition, the organic moiety comprises at least two atoms, not part of the linkable functional group, that are bonded by a π bond to each other.

Furthermore, the precursor solution comprises a liquid medium, which in this example comprises water and an alcohol, e.g., ethanol. In this example, the precursor solution further comprises a tetra-alkoxysilane, such as tetraethyl orthosilicate. In this example, the organosilane comprises a single organic moiety. The ratio of the number of organosilane molecules, to the number of organosilane and tetra-alkoxysilane molecules combined, in the precursor solution, is at least 0.3. As such, a ratio of the number of organic moieties to the number of silicon atoms in the precursor solution is at least 0.3.

The precursor solution is aged for from 0 to 70 days. During said aging, the organosilane and the tetra-alkoxysilane undergo hydrolysis, wherein the alkoxy groups of the organosilane and the tetra-alkoxysilane are substituted with hydroxy groups:

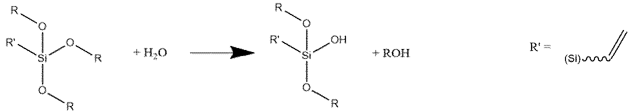

For simplicity, for the organic moiety R', only the linkable functional group, which, in this example, is a vinyl group, is shown. The hydroxy groups enable condensation reactions between hydrolysed organosilanes and hydrolysed tetra-alkoxysilanes and themselves:

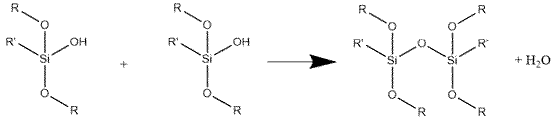

Tetra-alkoxysilane contains four alkoxy groups that can be hydrolysed. As such, hydrolysed tetra-alkoxysilane can undergo subsequent condensation with four other hydrolysed silane molecules. Therefore, each tetra-alkoxysilane molecule can form four links to other silane molecules (e.g., to organosilanes and/or to tetra-alkoxysilanes). It is an advantage of embodiments comprising tetra-alkoxysilane that a large, continuous silicon oxide network may be formed. However, although the presence of the tetra-alkoxysilane is, thus, preferred, it is not essential. Instead, the precursor solution may comprise the organosilane, but not the tetra-alkoxysilane.

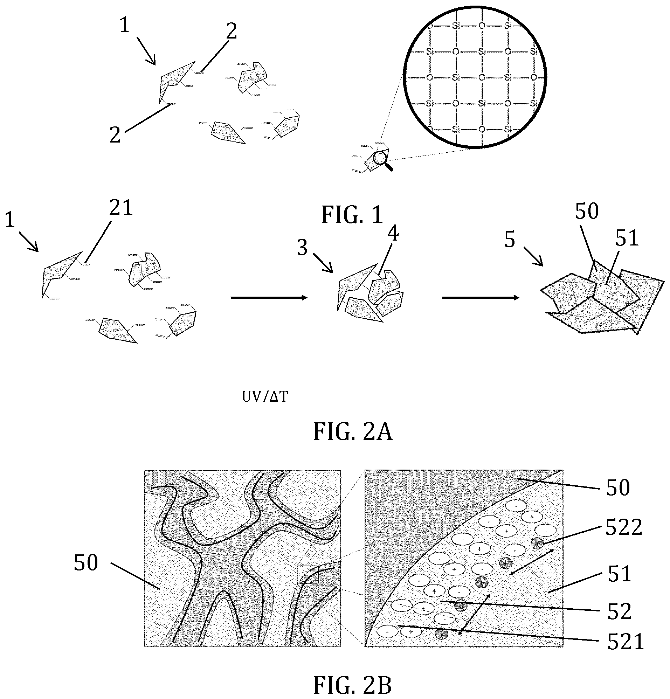

Reference is made to FIG. 1. Said condensation reactions may result in the formation of a plurality of silicon oxide particles 1 functionalized with the organic moieties 2. Without being bound by theory, it is believed that the silicon oxide particles 1 comprise a silicon oxide network. The silicon oxide particles 1 are functionalized with organic moieties 2 located at the periphery of the silicon oxide particles 1. Herein, each organic moiety 2 is covalently bonded to a silicon atom of this silicon oxide network. For simplicity, for the organic moieties 2 in FIG. 1, only the linkable functional group is shown, which, in this example, is a vinyl group. A ratio of the number of organic moieties to the number of silicon atoms in the precursor solution, before said hydrolysis and condensation reactions, is at least 0.3. As a result, after said hydrolysis and condensation reactions, a ratio of the number of organic moieties comprised in the plurality of silicon oxide particles to the number of silicon atoms comprised in the plurality of silicon oxide particles is at least 0.3. Thus, in this example, by aging of the precursor solution, the solution in accordance with embodiments of the present invention is formed.

### Example 2: Obtaining a stable solution

In this example, an assessment is made of what features may provide a solution in accordance with embodiments of the present invention with long-term stability. In the state of the art, solutions for forming a solid electrolyte tend to be chemically unstable, which may result in the formation of a solid electrolyte before it can be applied to an electrode.

In this example, the stability of various solutions comprising various organosilanes, and possibly tetraethyl orthosilicate, was assessed. Herein, the concentration of the organosilane, and the concentration of tetraethyl orthosilicate, was varied. The stability of solutions (at room temperature) comprising the following organosilanes was assessed:

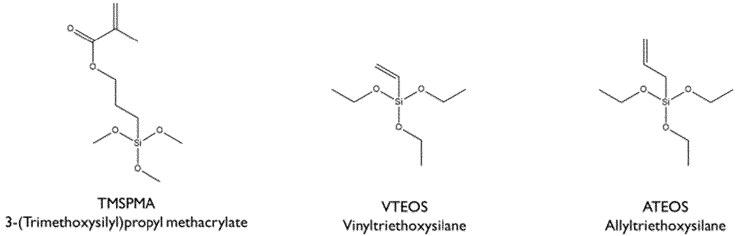

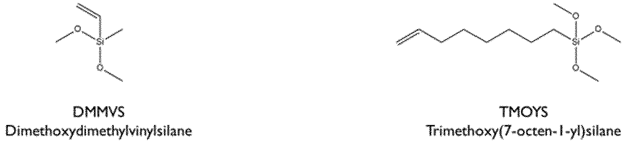

Each of these organosilanes comprises an organic moiety comprising a linkable functional group that is a vinyl or a vinylidene group. As an example, TMSPMA has an organic moiety comprising 9 non-hydrogen atoms (7C, and 2O), i.e., at least 4 non-hydrogen atoms. Also, the organic moiety in TMSPMA comprises two atoms (the C and O forming the carbonyl group), i.e., at least two atoms, other than hydrogen and not part of the linkable functional group, that are bonded by a π bond to each other. For TMSPMA, these two atoms are part of a π-conjugated system. The π-conjugated system further comprises the linkable functional group, i.e., the vinylidene group. The linkable functional group in TMSPMA is separated from the silicon atom to which the organic moiety is bonded by an organic connector chain of 5 atoms. From the silicon atom to the linkable functional group, these atoms are C, C, C, O, and C. Said organic connector chain, separating the linkable functional group from the silicon atom, and the linkable functional group together form a linear organic chain consisting of at least four atoms, i.e., consisting of 7 atoms, comprising 6 carbon atoms and 1 oxygen atom. Said linear organic chain is branched, namely by the oxygen atom of the carbonyl group, and by a methyl group.

In addition to the organosilanes and TEOS amounting together to 0.7 M, each solution further comprised 0.5 g/ml of an ionic liquid electrolyte (1-ethyl-3-methylimidazolium bis(trifluoromethylsulfonyl)imide), as well as water and ethanol in a volumetric ratio of 1:2. For each organosilane, a range of different solutions were prepared. Herein, different solutions comprised a different amount of organosilane and tetraethyl orthosilicate. The molar concentration of the organosilane and tetraethyl orthosilicate, combined, was constant between the different solutions.

A solution was considered to be stable when no visible gelation, precipitation or another visual change, was observed for the solution after 5 weeks after preparing the solution. For these stable solutions, no Tyndall scattering was observed, further confirming that no sol, i.e., colloidal suspension, was formed. A solution was considered to be unstable when gelation, precipitation or another visual change, was observed within 5 weeks of preparing the solution. For these unstable solutions, Tyndall scattering was observed.

Table I summarizes the experiments and the results. Herein, [TEOS] : [Organosilane] indicates the relative molar concentration of TEOS and organosilane in the solution.

**Table I: Summary of experiments for determining the stability of a range of solutions**

| **[TEOS] : [Organosilane]** | **TMSPMA** | **VTEOS** | **ATEOS** | **DMMVS** | **TMOYS** |
|---|---|---|---|---|---|
| **0:100** | Stable | Unstable | Unstable | Stable | Unstable |
| **20:80** | Stable | Unstable | Unstable | Stable | Unstable |
| **40:60** | Stable | Unstable | Unstable | Stable | Unstable |
| **50:50** | Stable | Unstable | Unstable | Unstable | Unstable |
| **60:40** | Unstable | Unstable | Unstable | Unstable | Unstable |
| **80:20** | Unstable | Unstable | Unstable | Unstable | Unstable |

As is clear from Table I, for three of the investigated organosilanes, no stable solution could be obtained, namely for vinyltriethoxysilane (VTEOS), allyltriethoxysilane (ATEOS), and trimethoxy(7-octen-1-yl)silane (TMOYS). For VTEOS and ATEOS, the limited size of the organic moiety may result in a limited steric hindrance, which means that condensation reactions proceed unhindered in the solution so that solidification may occur. For TMOYS, the linkable functional group is bonded to the silicon atom via an organic connector chain having a length of six carbon atoms. However, the organic moiety does not comprise at least two atoms, not part of the linkable functional group, that are bonded by a π bond to each other. Therefore, the steric hindrance is limited. As a result, condensation reactions may proceed unhindered for solutions comprising TMOYS.

For two other organosilanes, namely, dimethoxydimethylvinylsilane (DMMVS) and 3-(Trimethoxysilyl)propyl methacrylate (TMSPMA), solutions with long-term stability could be obtained. For DMMVS, stable solutions could be obtained when the ratio of the amount of DMMVS, to the amount of DMMVS and TEOS combined, is at least 0.6. For TMSPMA, stable solutions could be obtained when the ratio of the amount of TMSPMA, to the amount of TMSPMA and TEOS combined, is at least 0.5.

DMMVS is a dialkoxysilane, so that it can only form two links. Therefore, condensation is only possible in the formation of linear chains, preventing a large interconnected network from forming. Some solutions comprising DMMVS were still stable after ~2 months of aging.

TMSPMA comprises at least two atoms, not part of the linkable functional group, that are bonded to each other by a π bond. As such, the organic moiety of TMSPMA induces more steric hindrance compared to the organic moiety of TMOYS, which has a linear organic chain of the same length, i.e., 7 atoms, as TMSPMA. Because of the larger steric hindrance for the organic moiety of TMSPMA, the condensation rate for TMSPMA may be limited, preventing a silicon oxide matrix from forming in the solution. Other effects, such as a polarity of the organic moiety, which may be larger for TMSPMA due to the presence of the ester group, may also have an influence on the condensation rate. Some solutions comprising TMSPMA remained stable even after ~18 months of aging.

For all investigated organosilane compounds, solutions with different amounts of TEOS were prepared. Herein, increasing the amount of TEOS may increase the likelihood that a solidification reaction occurs, as TEOS is able to form four links with other silane molecules (organosilane and/or TEOS). No stable solution could be formed for VTEOS, ATEOS, or TMOYS. As mentioned above, for DMMVS, stable solutions could be obtained when the ratio of the amount of DMMVS, to the amount of DMMVS and TEOS combined, is at least 0.6. For TMSPMA, stable solutions could be obtained when the ratio of the amount of TMSPMA, to the amount of TMSPMA and TEOS combined, is at least 0.5. Adding more TEOS resulted in unstable solution with solidification to form a solid electrolyte.

As such, the following features for the organic moiety appear to increase the stability of the solution. The organic moiety comprises at least four non-hydrogen atoms. This results in steric hindrance. In addition, the organic moiety comprises at least 2 atoms, not part of the linkable functional group, that are bonded to each other by a π bond. This may increase a rigidity of the organic moiety and may, thus, result in further steric hindrance. To further increase steric hindrance, the organic moiety may comprise a linear organic chain comprising at least four atoms. In addition, said linear organic chain may be branched, e.g., comprises at least one side chain. It is an advantage that steric hindrance introduced by the organic moiety may limit a condensation reaction rate between silicon oxide particles formed in the solution. Thereby, a lifetime of the solution, i.e., a time before spontaneous solidification in the solution occurs, may be increased.

Preferably, the hydrolysis and condensation kinetics for the organosilane compound are faster than those of TEOS.

The stable solutions comprising TMSPMA of this example will, after aging, comprise a plurality of silicon oxide particles which are functionalized with organic moieties comprising linkable functional groups, i.e., vinyl or vinylidene groups (cfr., FIG. 1). Although aging may take several days, e.g., 14 days or possibly even longer, this does not compromise the manufacturability of solutions in accordance with embodiments of the present invention. Indeed, said aging can take place separate from the manufacturing line, e.g., separate from electrodes to which the solution is to be applied to form the solid electrolyte.

### Example 3: Activation of the solidification

Reference is made to FIG. 2A. In this example, a method in accordance with embodiments of the present is performed. A small amount of radical initiator (e.g., dimethoxy-2-phenylacetophenone) is dissolved in an aged solution in accordance with embodiments of the present invention. For example, the aged solution may be one formed in Example 1 above, or may be a stable solution comprising TMSPMA as formed in Example 2. As such, the aged solution comprises a plurality of silicon oxide particles 1 comprising organic moieties 2, of which a linkable functional group comprises a vinyl group or a vinylidene group. The aged solution further comprises an electrolyte compound, e.g., an ionic liquid electrolyte or a polymer electrolyte. Nitrogen gas may be bubbled through the solution, so as to remove any oxygen gas, dissolved in the solution, from the solution.

The solution may be used to form a self-standing film, e.g., by applying the solution on a silicon wafer, or may be used to form part of a battery, e.g., by impregnating the solution into an electrode.

The solution is subjected to a trigger, e.g., placed under a UV lamp or heated. Thereby, the radical initiator may be induced to form radical species. For example, if the radical initiator is dimethoxy-2-phenylacetophenone, the formed radical species comprises a benzoyl radical.

The radical species may activate the linkable functional group 2, i.e., the vinyl groups, of a silicon oxide particle 1, to form a covalent bond with another linkable functional group 21 on another silicon oxide particle 1. As such, the silicon oxide particles 1 in the solution become linked to each other by organic linking chains 4. Said organic linking chains 4 are formed of the organic moieties on separate silicon oxide particles 1 after reaction of the linkable functional groups 21 on the separate silicon oxide particles 1. After said linking of the silicon oxide particles 1 to each other, a precursor matrix 3 is formed of silicon oxide particles bonded by the linkable functional groups 21. As such, said precursor matrix 3 is a porous silicon oxide matrix, but comprising an intermittent silicon oxide network.

Once subjected to the trigger, the solution may solidify to form the precursor matrix 3 in a matter of minutes. This is a time frame that is sufficiently short to be applied in large-scale manufacturing. Herein, the electrolyte compound guides said formation such that a continuous network of pores is formed in the precursor matrix 3. After the solidification step, the water and solvent are removed, e.g., by a heat treatment or an application of a vacuum.

Over time, the presence of hydroxy groups in the precursor matrix 3 may result in further condensation reactions. As such, over time, a solid electrolyte 5, comprising a porous silicon oxide matrix 50 comprising a continuous silicon oxide network, and comprising the organic linking chains, may be formed from the silicon oxide particles 1. Herein, at least 30% of silicon atoms comprised in the silicon oxide matrix 50 is separated from another silicon atom in the silicon oxide matrix 50 by at least 4 atoms comprised in the organic linking chain. Herein, the electrolyte compound of the solid electrolyte 5 is present on walls of pores 51 of the porous silicon oxide matrix 50. These pores 51 are connected with each other and form a continuous network of pores through the porous silicon oxide matrix 50.

Reference is made to FIG. 2B, which is an enlargement of the solid electrolyte, showing the network of pores 51 in the porous silicon oxide matrix 50. The electrolyte compound 52 that is used to guide the formation of the porous silicon oxide matrix 50, in such a way that pores 51 are formed in the porous silicon oxide matrix 50, is located on walls of the pores 51. When the electrolyte compound 52 comprises an ionic liquid 521 and a metal salt 522, e.g., a lithium salt, the ionic liquid 521 may form a first layer covering inner walls of the pores of the porous silicon oxide matrix 50, and the metal salt 522 may form a second layer covering the first layer, i.e., the ionic liquid 521. As the walls of the pores 51 in the silicon oxide matrix 50 may be continuous, e.g., non-intermittent, between opposing sides of the solid electrolyte, the electrolyte compound 52 is continuous throughout the solid electrolyte. An ionic mobility of an ion, e.g., a cation, of the metal salt, e.g., of Li⁺, through the electrolyte compound 52 on the walls may be very fast. Therefore, the ionic conductivity of the solid electrolyte may be fast.

This procedure was performed for solutions comprising the organosilanes summarized in Table I. This procedure does not work very well for solutions comprising DMMVS. This could be a result of DMMVS only comprising two alkoxy groups which could be hydrolyzed and be involved in condensation reactions. As such, the formation of large clusters after applying the trigger (e.g., UV or heating) may be hindered for DMMVS.

The presence of organic moieties in the porous silicon oxide matrix may result in a high mass and volume. This may decrease the volumetric content of an electrolyte compound in the solid electrolyte and, as such, may reduce its ionic conductivity. However, this potential disadvantage may be solved by the optimization of the ratio of electrolyte compound to porous silicon oxide matrix. The organic linking chains may impart positive mechanical characteristics to the solid electrolyte, such as an increased elasticity and structural integrity. Said structural integrity may allow the synthesis of a solid electrolyte having a very high ratio of liquid electrolyte to porous silicon oxide matrix (e.g., up to [electrolyte compound]/[SiO₂] = 4, which is a ratio by mole), which may further improve the ionic conductivity of the solid electrolyte.

### Example 4: Experimental formation of solid electrolytes

In this example, a series of precursor solutions was prepared, by mixing:
- 1.65 g of an ionic liquid electrolyte, comprising a 1 M solution of a metal salt that is lithium bis(trifluoromethanesulfonyl)imide (LiTFSI) (lithium salt) in an ionic liquid that is 1-ethyl-3-methylimidazolium bis(trifluoromethylsulfonyl)imide (EMITFSI)
- 0.5 mL water (as reagent)
- 1 mL ethanol (as solvent)
- 2.26 mmol silanes, in varying ratios:
   ∘ organosilane 3-(trimethoxysilyl)propyl methacrylate (TMSPMA)
   ∘ tetraethyl orthosilicate (TEOS)

Within the series, a first sample comprises only TMSPMA as silane (i.e., no TEOS). A second sample comprises an equal molar amount of TMSPMA and TEOS. A third sample comprises an equal molar amount of TMSPMA and TEOS, and, furthermore, an amount (in g) of ILE (up to 4.4 g) that is larger than the amount (in g) of TMSPMA and that is larger than the amount (in g) of TEOS.

The Lewis structures of LiTFSI, EMITFSI, TMSPMA and TEOS are as follows:

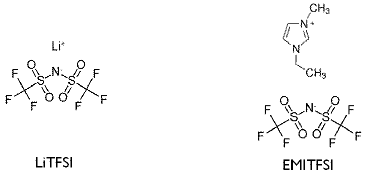

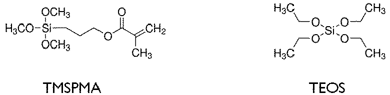

When the metal salt LiTFSI is dissolved in the ionic liquid EMITFSI, it forms an ionic liquid electrolyte (ILE). The reagents TMSPMA and TEOS are added as precursors to the formation of a silicon oxide matrix. TMSPMA and TEOS may form functionalized silicon oxide particles, by hydrolysis (by reaction with water) of their alkoxy groups, and subsequent condensation. TEOS has four alkoxy groups and can, therefore, form links with four other silane (i.e., TEOS and/or TMSPMA) molecules. TMSPMA has three alkoxy groups and can, therefore, only form three of such links. TMSPMA also comprises an organic moiety bonded to silicon, the organic moiety comprising a linkable functional group that is a vinyl.

As shown in Example 2, depending on the molar ratio between TMSPMA and TEOS, the precursor may either solidify spontaneously (when the ratio of the amount of TMSPMA, to the amount of TMSPMA and TEOS combined, is at most 0.4.) or may stay liquid for a longer time, e.g., at least 5 weeks (when the ratio of the amount of TMSPMA, to the amount of TMSPMA and TEOS combined, is at least 0.5). As explained above, this may be due to the fact that (i) TMSPMA can only form three links in this stage and (ii) the organic moiety on TMSPMA may induce steric hindrance.

The series of three precursor solutions were aged for at least 5 weeks, so that the silanes hydrolyse and condensate to form a plurality of silicon oxide particles, thereby forming a series of three solutions in accordance with embodiments of the present invention.

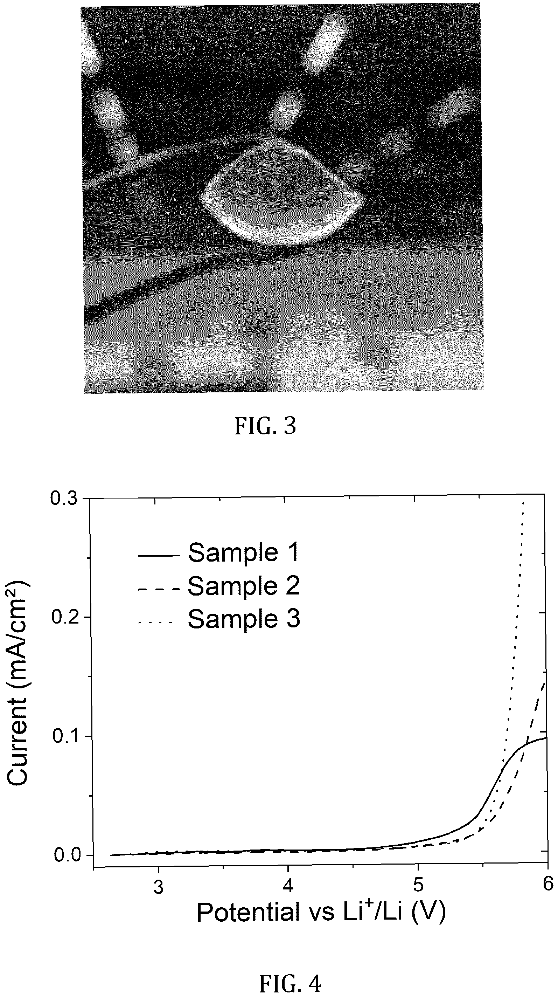

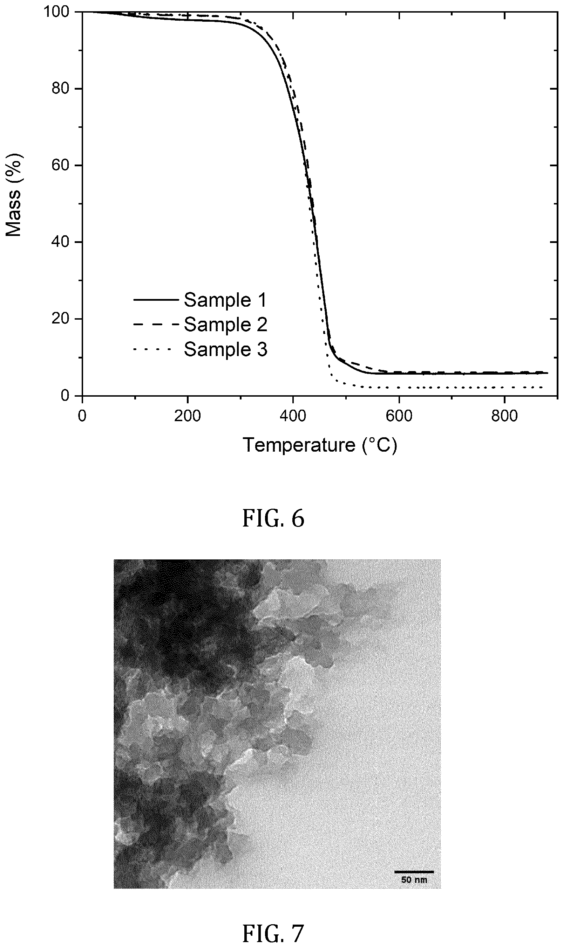

Subsequently, a radical initiator, i.e., photoinitiator 2,2-dimethoxy-2-phenylacetophenone (DMPA), was dissolved in each solution of the series of solutions, at a concentration of 5 mg/mL. Next, nitrogen gas was bubbled through the solution to remove any dissolved oxygen. The aged solutions comprising the photoinitiator were poured into a mold and subjected to 1 hour of UV radiation. This induced the photoinitator to form radical species, which initiated reactions between the vinylidene groups of organic moieties of different silicon oxide particles. Thereby, solidification occurred in a timespan of approximately 1 minute, thereby forming a solid electrolyte (see FIG. 3 for a photograph of one of the formed solid electrolytes, and FIG. 7 for a transmission electron microscopy image of one of the formed solid electrolytes).

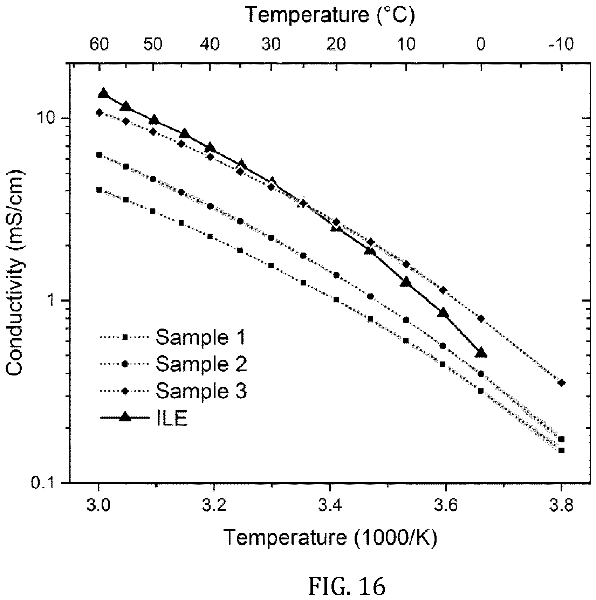

The solid electrolytes were dried and their ionic conductivity was measured at varying temperatures using electrochemical impedance spectroscopy. The electrochemical cell was placed in a binder oven to accurately control the temperature. The conductivity of the incorporated ILE was measured using a conductometer, with the samples placed in a thermostatic bath. Figure 16 shows an Arrhenius plot of the conductivity of the solid electrolytes and of the ILE that was incorporated in those electrolytes in function of temperature. Whereas the temperature dependence between the three solid electrolytes is quite similar, the ILE conductivity varies more widely with temperature. This means that there is a temperature window (i.e., temperatures <25 °C), where the solid electrolyte obtained from sample 3 has a higher conductivity than that of the incorporated ILE. Table II summarizes the measured ionic conductivity at 20°C for each of the solid electrolytes formed from the first, second, and third sample. When only the trialkoxysilane TMSPMA was used as precursor for forming the porous silicon oxide matrix (sample 1), the ionic conductivity (at 20°C) of the solid electrolyte had a value of 1.01 mS/cm. When the solution also comprises TEOS, the ionic conductivity (at 20 °C) of the solid electrolyte reached 1.37 mS/cm (sample 2). Increasing the amount of ILE in the solution, and thereby the concentration of the ILE in the porous silicon oxide matrix, further improves the ionic conductivity, to a value of 2.70 mS/cm (sample 3). For comparison, the ionic conductivity of the pure ILE is 2.51 mS/cm.

**Table II: Ionic conductivity values (at 20 °C) of solid electrolytes formed from the first, second, and third sample**

| **Sample** | **Ionic conductivity (mS/cm)** |
|---|---|
| 1 | 1.01 |
| 2 | 1.37 |
| 3 | 2.70 |
| ILE | 2.51 |

Reference is made to FIG. 4, which is a plot of linear sweep voltammetry performed on each of the three solid electrolytes. Herein, linear sweep voltammetry was performed using stainless steel/Li coin cells, at a sweep rate of 10 mV s⁻¹ at room temperature. The linear sweep voltammetry may provide information on the anodic stability limit. From the linear sweep voltammetry, it appeared that the solid electrolyte formed from sample 1 had the lowest electrochemical stability. The solid electrolyte formed from sample 2, wherein TEOS was present, increased the stability limit. Finally, increasing the concentration of ILE had no significant effect on the stability.

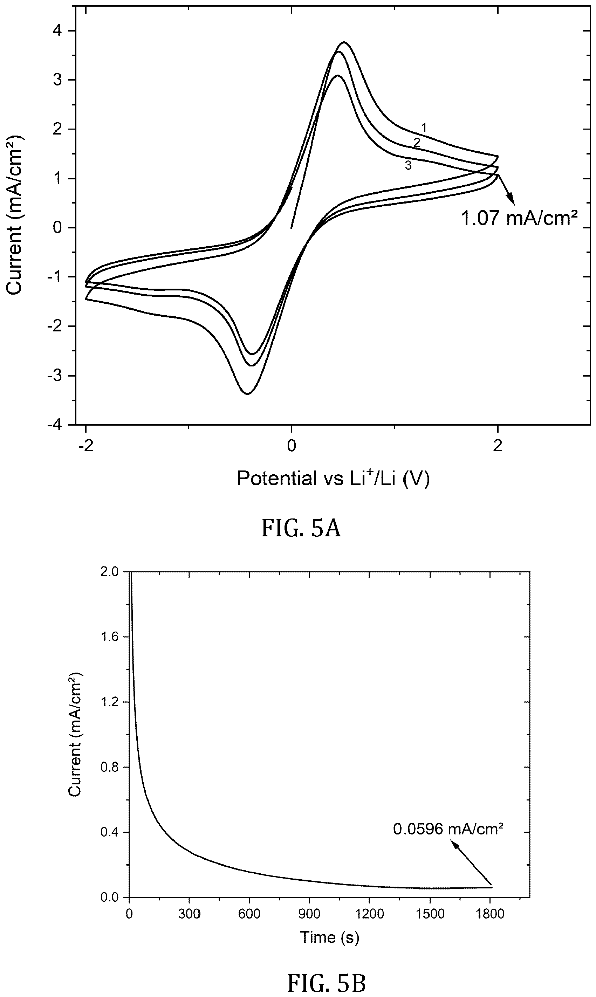

Reference is made to FIG. 5A, which is a plot of three cyclic voltammetry steps performed on the solid electrolyte formed from sample 3, and to FIG. 5B, which is a plot of current as dependent on time, during a constant voltage period of 30 minutes after the cyclic voltammetry of FIG. 5A, preceded by a constant voltage period of 20 minutes. The lithium dissolution into the solid electrolyte formed from sample 3 was investigated. Symmetric Li/Li coin cells were constructed with the solid electrolyte formed from sample 3 sandwiched in between the electrodes. Three cyclic voltammetry steps were performed (-2 to 2 V, at a rate of 20 mV s⁻¹), where the current at 2 V during the third cycle was 1.07 mA/cm² (see FIG. 5A). After a period of 20 minutes of open circuit voltage, a potential of 1 V was applied, and a steady-state current of 0.0596 mA/cm² was measured after 1800 seconds (see FIG. 5B). These values are similar to those of reference solid electrolytes of the state of the art, formed from a reference solution having a similar concentration of ILE as solution 3, but wherein the silanes consisted of TEOS (1.42 mA/cm² and 0.23 mA/cm², respectively). This indicates that the lithium ion dissolution in the solid electrolyte formed from sample 3 is similar to that of the reference solid electrolyte of the state of the art.

Reference is made to FIG. 6, which is a plot for a thermal gravimetric analysis, in a N₂ atmosphere and at a rate of 10 °C min⁻¹, of the solid electrolyte formed of sample 1. The thermal decomposition profile shows that the solid electrolyte is stable up to a temperature of ~300 °C.

Reference is made to FIG. 7, which is a transmission electron microscopy (TEM) image of the solid electrolyte formed of sample 1, after subsequent removal of any ILE in the solid electrolyte, by washing with acetonitrile and subsequent drying. As such, FIG. 7 shows a (pure) porous silicon oxide matrix. The TEM image shows that the solid porous silicon oxide matrix of the solid electrolyte consists of particles of ~50 nm in size, which are interconnected to form an interconnected porous network. The ILE would be contained in the interconnected porous network of the solid electrolyte.

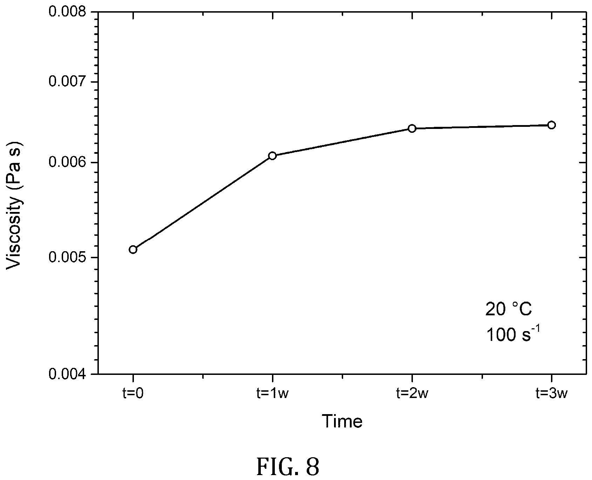

Reference is made to FIG. 8, which is a plot of the measured viscosity of sample 1, as a function of time after formation of the (non-aged, precursor) solution. Herein, the viscosity is measured at a temperature of 20 °C and a shear rate of 100 s⁻¹. The viscosity increases significantly during the first two weeks of aging, indicating that hydrolysis and condensation reactions occur in this timeframe. The viscosity stagnates after two weeks of aging, indicating that condensation reactions terminated after the two weeks.

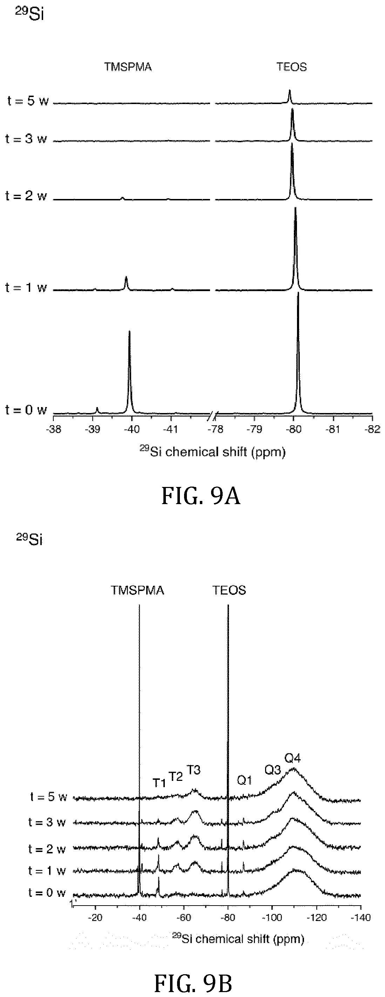

Reference is made to FIGs. 9A and B, 10, and 11, which are spectra from different types of NMR spectroscopy, performed on sample 2, as a function of time (from 0 to 5 weeks after preparation of the (unaged) solution). Reference is made to FIGs. 9A and B, which show a ²⁹Si NMR spectrum of sample 2. It may be observed that the TMSPMA peak decreases much faster than the TEOS peak. Therefore, it can be concluded that the hydrolysis and condensation rates for TMSPMA are considerably faster than for TEOS. In addition, T1, T2, and T3 structures (corresponding to TMSPMA molecules that have undergone hydrolysis and condensation with 1, 2, and 3 different silane molecules, respectively) are more rapidly formed than the Q1, Q2, Q3, and Q4 structures (corresponding to TEOS molecules that have undergone hydrolysis and condensation with 1, 2, 3, and 4 different silane molecules, respectively). The formation of these condensed species imply that larger silicon oxide particles are being formed over the course of the investigated period.

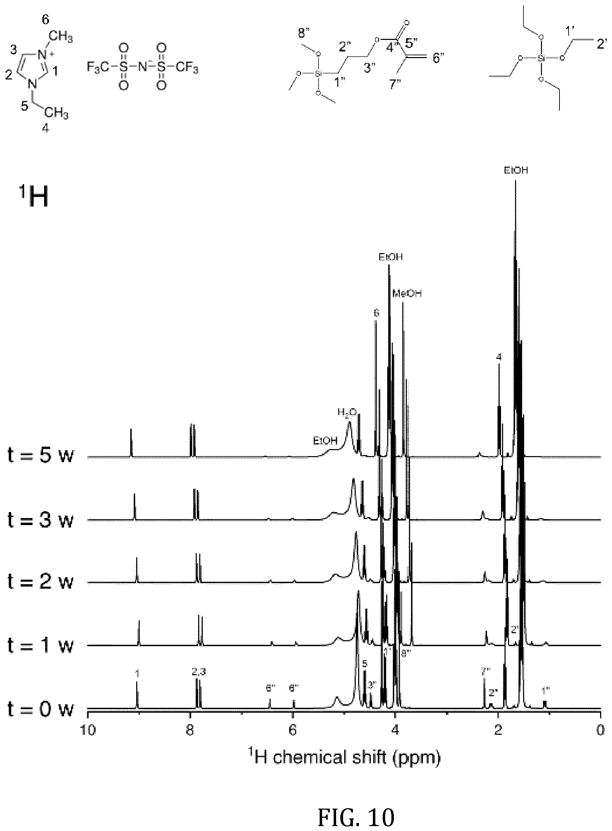

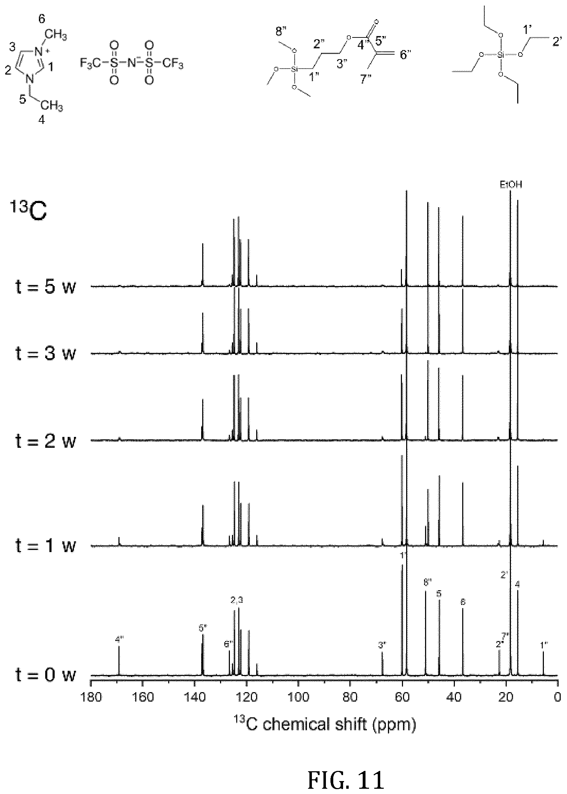

In the ¹H NMR spectra (FIG. 10) and ¹³C NMR spectra (FIG. 11) of sample 2, the signals of the atoms in the alkoxy groups of the silanes may be observed to slowly disappear. This occurs faster for TMSPMA than for TEOS, supporting the observation from the ²⁹Si spectra. The signals that relate to EMITFSI of the ILE remain unchanged throughout the observed 5 weeks, indicating that the ILE remains stable during this time period. The signals from the organic moiety of TMSPMA broaden over time. This indicates that the structure becomes less mobile, implying that the TMSPMA molecules are incorporated into larger silicon oxide particles that are formed over time. This confirms the observations for the ²⁹Si spectra.

The changes in ²⁹Si, ¹H, and ¹³C NMR spectra between 3 weeks after formation of the solution and 5 weeks after formation of the solution are limited. Therefore, we can assume that the hydrolysis and condensation reactions are nearly complete after 5 weeks, and that the silicon oxide have reached their final composition after this period.

### Example 5: Experimental formation of batteries

Electrode slurries were formulated with 80 wt% active composite material, 10 wt% carbon black (Super C65, Imerys), and 10 wt% poly(vinylidene fluoride) (PVDF, Alfa Aesar). These components were mixed in N-methyl-2-pyrrolidone (NMP, Alfa Aesar, 99.0%+) by ball milling (LiFePO₄ (LFP), Retsch Emax, 500 rpm, 30 min, zirconia balls of 1 cm diameter) or planetary vacuum mixing (LiNi_{0.6}Mn_{0.2}Co_{0.2} (NMC622, Thinky ARV 310 LED, 2000 rpm, 10 min). The slurries were coated on 15 µm thick aluminum foil (blade height: 150 µm). The coated slurries were dried at 110 °C (2 h). The electrodes had mass loadings of 1.9 mg cm⁻² (LFP) and 2.17 mg cm⁻² (NMC622).

Stacks of an electrode and a thin glass fiber (EL-CELL, 19 mm diameter and 0.26 mm thickness) were impregnated with sample 3 and subjected to UV radiation for 1 h. The resulting impregnated stacks were dried in a dry room for at least two weeks prior to cell assembly. LFP/Li and NMC622/Li coin cells (type CR2025) were assembled in an argon-filled glovebox (MBraun, H₂O < 0.1 ppm, O₂ < 0.1 ppm) and subjected to galvanostatic cycling (BCS-805, Bio-Logic) after an open circuit voltage (OCV) period of 16 h. The LFP/Li cells were cycled in the voltage window of 2-4.5 V (theoretical capacity of 170 mAh.g⁻¹), and the NMC622/Li cell were cycled in the voltage window of 3-4.3 V (theoretical capacity of 175 mAh.g⁻¹). All charge/discharge cycles were separated by an OCV period of 30 minutes.

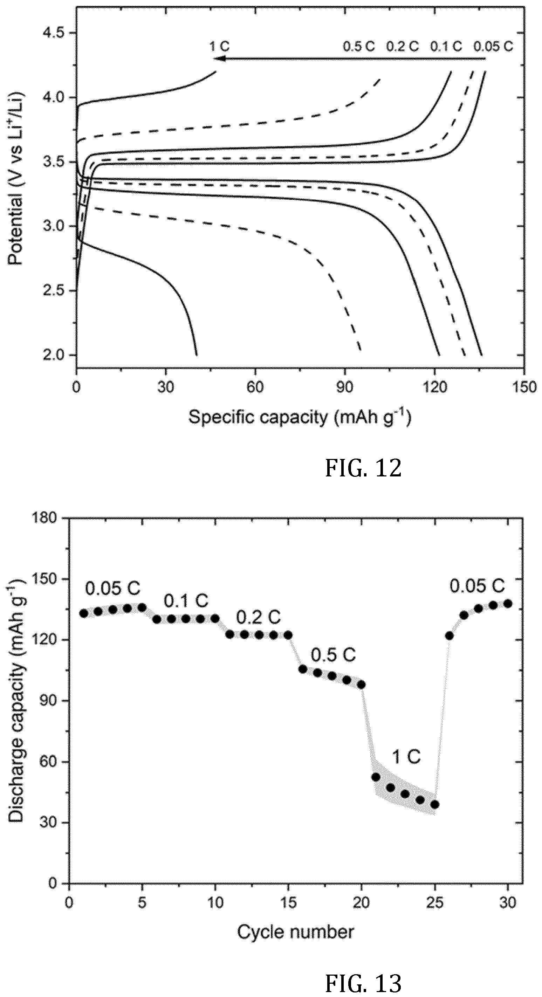

The galvanostatic charge/discharge curves of a LFP/Li cell (Figure 12) show the voltage plateaus centered around ~3.5 V that are typical for LFP. This indicates that (i) the solidification of sample 3 after impregnation, irradiation, and drying within the electrode and the separator was successful, that (ii) the bulk active material is not broken down during the impregnation/irradiation/drying steps, and that (iii) the solidified material does indeed have the required functional properties of a solid electrolyte. The cell had a discharge capacity at room temperature of 136, 130, 122, 97, and 39 mAh g⁻¹ at 0.05 C, 0.1 C, 0.2 C, 0.5 C, and 1 C, respectively (Figure 13). These discharge capacities are slightly higher than those obtained by CHEN, Xubin, et al., who used LFP electrodes with similar loading in conjunction with a standard nanoSCE electrolyte (obtained without triggered solidification). This, together with the reproducibility and stability of the obtained results (see standard deviation indicated by the shaded area in Figure 13), prove the functionality, manufacturability, and electrode compatibility of the electrolytes described in the invention.

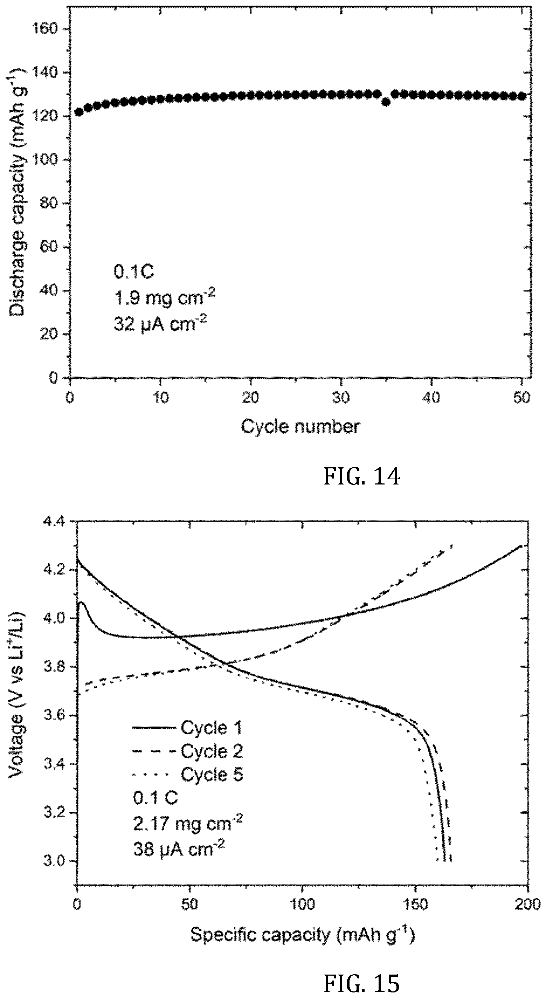

The stability of the solid electrolyte obtained from sample 3 was investigated by prolonged cycling of a LFP/Li cell containing said electrolyte at 0.1 C at room temperature (Figure 14, current density of 32 µA cm⁻²). The cell did not lose any capacity over the course of 50 cycles (~35 days of continuous battery operation). This proves that the solid electrolyte has a high bulk stability during electrochemical operation in conjunction with LFP positive electrodes.

NMC622/Li cells containing the solid electrolyte obtained from sample 3 were assembled to test the latter's compatibility with high energy density positive electrode materials. The galvanostatic charge/discharge curves of such a cell continuously cycled at 0.1 C at room temperature (Figure 15, current density of 38 µA.cm⁻²) show the slanted curves typically observed for NMC622. As was the case for the LFP/Li cells, this indicates (i) the success of the electrolyte solidification during the impregnation, irradiation, and drying steps, (ii) the bulk stability of NMC622 during the impregnation/irradiation/drying steps, and (iii) the functional properties of the solid electrolyte.

It is to be understood that although preferred embodiments, specific constructions and configurations, as well as materials, have been discussed herein for devices according to the present invention, various changes or modifications in form and detail may be made without departing from the scope of this invention. Steps may be added to methods described within the scope of the present invention.

## Claims

1. A solution for forming a solid electrolyte (5), the solution comprising:
• a plurality of silicon oxide particles (1) dissolved in a liquid medium, the silicon oxide particles (1) being functionalized with organic moieties (2) comprising:
∘ at least four non-hydrogen atoms, of which one atom is covalently bonded to a silicon atom of the silicon oxide particles, and
∘ a linkable functional group (21) capable, after activation by a radical species, of forming a covalent bond by reaction with another identical linkable functional group (21),
wherein the organic moiety (2) comprises at least two atoms, not part of the linkable functional group (21), that are bonded by a π bond to each other,
wherein a ratio of the number of said organic moieties (2) to the number of silicon atoms comprised in the plurality of silicon oxide particles (1) is at least 0.3, and
• an electrolyte compound (52).

2. The solution according to claim 1, wherein said ratio is from 0.4 to 0.9, preferably from 0.4 to 0.6.

3. The solution according to claim 1 or 2, wherein the at least two atoms that are bonded by a π bond to each other are part of a π-conjugated system.

4. The solution according to any of the previous claims, wherein the organic moiety (2) comprises a linear organic chain comprising at least four atoms.

5. The solution according to any of the previous claims, wherein the linkable functional group (21) is separated from the silicon atom to which the organic moiety (2) is bonded by an organic connector chain of at most 20 atoms.

6. The solution according to any of the previous claims, wherein the linkable functional group (21) is a vinyl group or a vinylidene group.

7. The solution according to any of the previous claims, wherein the functionalized silicon oxide particles (1) are obtainable by aging a precursor solution comprising an organosilane comprising a silicon atom attached to four groups, the four groups comprising the organic moiety (21) and at least two alkoxy groups.

8. The solution according to claim 7, wherein the organosilane comprises 3-trimethoxysilylpropyl methacrylate.

9. The solution according to claim 7 or 8, wherein the precursor solution further comprises a tetra-alkoxysilane.

10. A method for forming a solid electrolyte (5), the method comprising:
a) obtaining the solution of any of the previous claims,
b) adding, to the solution, a radical initiator adapted for forming the radical species for inducing said activation, and
c) converting the radical initiator into the radical species.

11. The method according to claim 10, wherein step c) is performed while the solution has a pH of from 5 to 7.

12. The method according to claim 10 or 11, wherein said converting comprises illumination or heating of the solution.

13. The method according to any of claims 10 to 12, wherein the radical initiator comprises dimethoxy-2-phenylacetophenone, dibenzyol peroxide, or azobisisobutyronitril.

14. A solid electrolyte (5) comprising a porous silicon oxide matrix (50), and an electrolyte compound (52), covering walls of pores (51) of the porous silicon oxide matrix (50), wherein at least 30% of silicon atoms comprised in the silicon oxide matrix (50) is separated from another silicon atom in the silicon oxide matrix (50) by at least 4 atoms comprised in an organic linking chain (4).

15. A battery comprising the solid electrolyte (5) according to claim 14.

## Patentansprüche

1. Eine Lösung zum Bilden eines Festelektrolyts (5), wobei die Lösung umfasst:
- eine Vielzahl von Siliziumoxidpartikeln (1), die in einem flüssigen Medium gelöst sind, wobei die Siliziumoxidpartikel (1) mit organischen Resten (2) funktionalisiert sind, umfassend:
- mindestens vier Nicht-Wasserstoffatome, von denen ein Atom kovalent an ein Siliziumatom der Siliziumoxidpartikel gebunden ist, und
- eine vernetzbare funktionelle Gruppe (21) die nach Aktivierung durch eine Radikalspezies zum Bilden einer kovalenten Bindung durch Reagieren mit einer anderen identischen vernetzbaren funktionellen Gruppe (21) in der Lage ist,
wobei der organische Rest (2) mindestens zwei Atome umfasst, die der vernetzbaren funktionellen Gruppe (21) nicht angehören, die durch eine π Bindung aneinander gebunden sind,
wobei ein Verhältnis der Anzahl der organischen Reste (2) zur Anzahl an Siliziumatomen, die in der Vielzahl von Siliziumoxidpartikeln (1) umfasst sind, mindestens 0,3 beträgt, und
- eine Elektrolytverbindung (52).

2. Die Lösung nach Anspruch 1, wobei das Verhältnis von 0,4 bis 0,9, vorzugsweise von 0,4 bis 0,6 reicht.

3. Die Lösung nach Anspruch 1 oder 2, wobei die mindestens zwei Atome; die durch eine π Bindung aneinander gebunden sind, Teil eines π-konjugierten Systems sind.

4. Die Lösung nach einem der vorstehenden Ansprüche, wobei der organische Rest (2) eine lineare organische Kette umfasst, die mindestens vier Atome umfasst.

5. Die Lösung nach einem der vorstehenden Ansprüche, wobei die vernetzbare funktionelle Gruppe (21) vom Siliziumatom getrennt ist, an das der organische Rest (2) durch eine organische Verbinderkette von höchstens 20 Atomen gebunden ist.

6. Die Lösung nach einem der vorstehenden Ansprüche, wobei die vernetzbare funktionelle Gruppe (21) eine Vinyl-Gruppe oder eine Vinyliden-Gruppe ist.

7. Die Lösung nach einem der vorstehenden Ansprüche, wobei die funktionalisierten Siliziumoxidpartikel (1) durch Altern einer Vorläuferlösung erhältlich ist, die ein Organosilan umfasst, das ein Siliziumatom umfasst, das an vier Gruppen befestigt ist, wobei die vier Gruppen den organischen Rest (21) und mindestens zwei AlkoxyGruppen umfassen.

8. Die Lösung nach Anspruch 7, wobei das Organosilan 3-Trimethoxysilylpropylmethacrylat umfasst.

9. Die Lösung nach Anspruch 7 oder 8, wobei die Vorläuferlösung weiter ein Tetra-Alkoxysilan umfasst.

10. Ein Verfahren zum Bilden eines Festelektrolyts (5), wobei das Verfahren umfasst:
a)- Erhalten der Lösung nach einem der vorstehenden Ansprüche,
b)- Beigeben zur Lösung eines Radikalinitiators, der zum Bilden der Radikalspezies zum Induzieren der Aktivierung angepasst ist, und
c)- Umwandeln des Radikalinitiators in die Radikalspezies.

11. Das Verfahren nach Anspruch 10, wobei Schritt c) durchgeführt wird, während die Lösung einen pH-Wert von 5 bis 7 aufweist.

12. Das Verfahren nach Anspruch 10 oder 11, wobei das Umwandeln Beleuchten oder Erwärmen der Lösung umfasst.

13. Das Verfahren nach einem der Ansprüche 10 bis 12, wobei der Radikalinitiator Dimethoxy-2-phenylacetophenon, Dibenzyolperoxid, oder Azobisisobutyronitril umfasst.

14. Ein Festelektrolyt (5), umfassend eine poröse Siliziumoxidmatrix (50), und eine Elektrolytverbindung (52), die Porenwände (51) der porösen Siliziumoxidmatrix (50) bedeckt, wobei mindestens 30% von Siliziumatomen, die in der Siliziumoxidmatrix (50) umfasst sind, von einem anderen Siliziumatom in der Siliziumoxidmatrix (50) durch mindestens 4 Atome, die in der organischen Verbinderkette (4) umfasst sind, getrennt sind.

15. Eine Batterie, die das Festelektrolyt (5) nach Anspruch 14 umfasst.

## Revendications

1. Une solution pour former un électrolyte solide (5), ladite solution comprenant :
• une pluralité de particules d'oxyde de silicium (1) dissoutes dans un milieu liquide, lesdites particules d'oxyde de silicium (1) étant fonctionnalisées avec des motifs organiques (2) comprenant :
o au moins quatre atomes non-hydrogène, dont un atome est lié de manière covalente à un atome de silicium desdites particules d'oxyde de silicium, et
o un groupe fonctionnel liant (21) capable, après activation par une espèce radicalaire, de former une liaison covalente par réaction avec un autre groupe fonctionnel liant identique (21),
dans lequel ledit motif organique (2) comprend au moins deux atomes, ne faisant pas partie du groupe fonctionnel liant (21), qui sont liés entre eux par une liaison π,
dans lequel un rapport du nombre desdits motifs organiques (2) au nombre d'atomes de silicium compris dans ladite pluralité de particules d'oxyde de silicium (1) est d'au moins 0,3, et
• un composé électrolytique (52).

2. La solution selon la revendication 1, dans lequel ledit rapport est de 0,4 à 0,9, de préférence de 0,4 à 0,6.

3. La solution selon la revendication 1 ou 2, dans lequel lesdits au moins deux atomes qui sont liés entre eux par une liaison π font partie d'un système π-conjugué.

4. La solution selon l'une quelconque des revendications précédentes, dans lequel ledit motif organique (2) comprend une chaîne organique linéaire comprenant au moins quatre atomes.

5. La solution selon l'une quelconque des revendications précédentes, dans lequel ledit groupe fonctionnel liant (21) est séparé de l'atome de silicium auquel ledit motif organique (2) est lié par une chaîne de connexion organique d'au plus 20 atomes.

6. La solution selon l'une quelconque des revendications précédentes, dans lequel ledit groupe fonctionnel liant (21) est un groupe vinyle ou un groupe vinylidène.

7. La solution selon l'une quelconque des revendications précédentes, dans lequel lesdites particules d'oxyde de silicium fonctionnalisées (1) sont obtenables par vieillissement d'une solution précurseur comprenant un organosilane comprenant un atome de silicium attaché à quatre groupes, lesdits quatre groupes comprenant ledit motif organique (21) et au moins deux groupes alkoxy.

8. La solution selon la revendication 7, dans lequel ledit organosilane comprend le méthacrylate de 3-triméthoxysilylpropyle.

9. La solution selon la revendication 7 ou 8, dans lequel ladite solution précurseur comprend en outre un tétra-alkoxysilane.

10. Un procédé pour former un électrolyte solide (5), ledit procédé comprenant :
a) l'obtention de ladite solution selon l'une quelconque des revendications précédentes,
b) l'ajout, à ladite solution, d'un initiateur radicalaire adapté pour former ladite espèce radicalaire pour induire ladite activation, et
c) la conversion dudit initiateur radicalaire en ladite espèce radicalaire.

11. Le procédé selon la revendication 10, dans lequel ladite étape c) est réalisée tandis que ladite solution a un pH de 5 à 7.

12. Le procédé selon la revendication 10 ou 11, dans lequel ladite conversion comprend l'illumination ou le chauffage de ladite solution.

13. Le procédé selon l'une quelconque des revendications 10 à 12, dans lequel ledit initiateur radicalaire comprend la diméthoxy-2-phénylacétophénone, le peroxyde de dibenzoyle, ou l'azobisisobutyronitrile.

14. Un électrolyte solide (5) comprenant une matrice poreuse d'oxyde de silicium (50), et un composé électrolytique (52), recouvrant les parois des pores (51) de ladite matrice poreuse d'oxyde de silicium (50), dans lequel au moins 30 % des atomes de silicium compris dans ladite matrice d'oxyde de silicium (50) est séparé d'un autre atome de silicium dans ladite matrice d'oxyde de silicium (50) par au moins 4 atomes compris dans une chaîne de liaison organique (4).

15. Une batterie comprenant ledit électrolyte solide (5) selon la revendication 14.
